(19) Europäisches Patentamt
European Patent Office
Office européen des brevets

(11) EP 1 031 601 A1

(12) EUROPEAN PATENT APPLICATION
published in accordance with Art. 158(3) EPC

(43) Date of publication:
**30.08.2000 Bulletin 2000/35**

(21) Application number: **97911476.6**

(22) Date of filing: **06.11.1997**

(51) Int. Cl.[7]: **C08J 9/12**

(86) International application number:
**PCT/JP97/04054**

(87) International publication number:
**WO 99/24499 (20.05.1999 Gazette 1999/20)**

(84) Designated Contracting States:
**DE FR GB IT**

(71) Applicant:
**MATSUSHITA REFRIGERATION COMPANY**
**Higashiosaka-shi, Osaka 577-8501 (JP)**

(72) Inventors:
- **NAKAMOTO, Hideo**
  **Osaka-shi, Osaka 532 (JP)**
- **TSUDA, Yoshiyuki**
  **Ikeda-shi, Osaka 565 (JP)**
- **YUASA, Akiko**
  **Kyotanabe-shi, Kyoto 610-03 (JP)**

(74) Representative:
**Herrmann-Trentepohl, Werner, Dipl.-Ing.**
**Patentanwälte**
**Herrmann-Trentepohl**
**Grosse - Bockhorni & Partner**
**Forstenrieder Allee 59**
**81476 München (DE)**

# (54) FOAMED INSULATING MATERIAL, INSULATING BOX BODY MADE USING SAID FOAMED INSULATING MATERIAL, AND PROCESS FOR PREPARING FOAMED INSULATING MATERIAL

(57) The thermal insulating foamed material 4 comprises a foamed polyurethane resin composition having closed cells filled with a volatile blowing agent, and having an alkali metal carbonate 7 or an alkaline-earth metal carbonate 7, formed by a reaction of an alkali metal hydroxide or an alkaline-earth metal hydroxide with carbon dioxide, and a water adsorbent 10 having a moistened water-absorbing substance 8 covered with a resinous coating film 9, enclosed in said thermal insulating foamed material 4, respectively.

FIG. 2

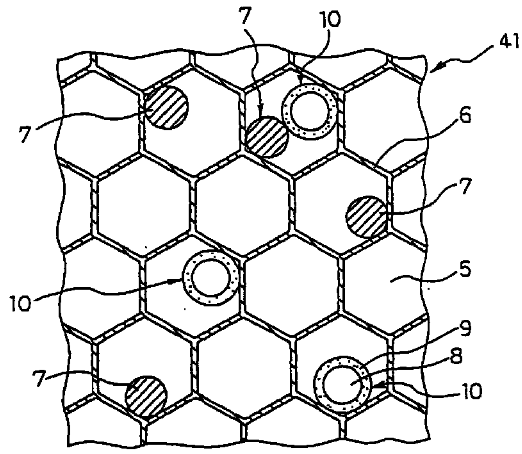




Printed by Xerox (UK) Business Services
2.16.7 (HRS)/3.6

## Description

### TECHNICAL FIELD

The present invention relates to technologies on a thermal insulating foamed material for use in refrigerators, freezers and the like and a thermal insulation cabinet using the thermal insulating foamed material as well as a method for manufacturing the thermal insulating foamed material.

### BACKGROUND ART

Recently, in this technical field, there have been needs of decrease in thermal conductivity and improvement in thermal insulation of thermal insulating foamed materials from a viewpoint of energy-saving. Concurrently, the environmental disruption, such as ozone depletion, global warming and so on owing to chlorofluorocarbon (hereinafter referred to as CFC) and hydrochlorofluorocarbon (hereinafter abbreviated as HCFC) are becoming problems. Therefore, in this technical field, it has been a very important subject to meet the above-mentioned needs and to solve these problems.

Accordingly, in the production of rigid urethane foam as a typical thermal insulating foamed material, various foaming techniques using a volatile blowing agent such as a hydrofluorocarbon (hereinafter abbreviated as HFC), which has no effect on the ozone depletion, a hydrocarbon (hereinafter abbreviated as HC), which is less effective to the global warming, or the like are now under examination in order to decrease the amount of CFC and HCFC to be used.

In order to improve thermal insulation ability of the rigid urethane foam (hereinafter abbreviated simply as foam), it is basically important to decrease gaseous thermal conductivity of a gaseous composition in closed cells in the foam. Therefore, it has been an effective measure to remove carbon dioxide, which is a blowing substance having a high gaseous thermal conductivity, from inside of the closed cells and to fill the closed cells with a volatile blowing agent, in order to improve the thermal insulation ability.

However, in the conventional blowing technique, in order to attain decrease in amount of the volatile blowing agent used, to avoid a problem of undesirable miscibility between the blowing agent and the material component, and to improve properties of the foam such as a density and so on of the foam, it has been needed to use carbon dioxide, which has a high gaseous thermal conductivity, generated by a reaction of a reactive blowing substance such as pure water or the like with an organic polyisocyanate, as a component for the blowing agent.

However, in a thermal insulating foamed material containing such carbon dioxide as a blowing substance, carbon dioxide having a high gaseous thermal conductivity remained in cells. Therefore, the thermal insulation ability of the thermal insulating foamed material was bad.

As a means for solving these problems, a method for manufacturing a thermal insulating foamed material has been proposed, for example, in Official Gazette of Japanese Unexamined Patent Publication Hei 6-322166. The method proposed in this publication was a method in which carbon dioxide component in the cell was removed by a carbon dioxide adsorbents. In this method, a carbon dioxide adsorbent composed of an alkali metal hydroxide and others having a high carbon dioxide adsorbing ability was mixed in advance into the raw material. The generated carbon dioxide was adsorbed by this carbon dioxide adsorbent and thus cells were filled with a gaseous blowing agent alone. In this manner, the thermal insulation ability of the thermal insulating formed material disclosed in Official Gazette of Japanese Unexamined Patent Publication Hei 6-322166 was attempted to improve by using a carbon dioxide adsorbent.

However, in the constitution disclosed in Japanese Unexamined Patent Publication Hei 6-322166, the carbon dioxide adsorbent composed of an alkali metal hydroxide and others, generates water as a by-product in the course of the reaction for adsorbing carbon dioxide, as shown in the following equation.

$$MeOH + CO_2 \rightarrow MeCO_3 + H_2O$$

wherein Me is an alkali metal, for example, Li, Na, K or the like.

In other words, the carbon dioxide in the inside of the closed cells in the thermal insulating foamed material is adsorbed by the carbon dioxide adsorbent composed of an alkali metal hydroxide or the like. It is certainly possible, by this method, to substantially increase the ratio of a volatile blowing agent having a low thermal conductivity in the inside of closed cells. However, water is simultaneously generated as a by-product, the water disperses within the closed cells until a certain vapor pressure is attained. This means that water exists as a gaseous composition in the inside of the closed cells in the thermal insulating foamed material. Because the thermal conductivity of water is extremely high, sometimes the conventional thermal insulating foamed material manufactured as described above can not have a sufficient decreasing effect on thermal conductivity.

Accordingly, in this field, there are yet needs for developing a thermal insulating foamed material, in which carbon dioxide in the cells in the thermal insulating foamed material is adsorbed by a carbon dioxide adsorbent such as an alkali metal hydroxide, of which a change for the worse in the thermal conductivity by water generated by the side-reaction is avoided, and which has an excellent thermal insulation ability, and developing a thermal insulation cabinet using such thermal insulating foamed material.

In view of the above-mentioned needs, an object of the present invention is to provide by quickly adsorbing carbon dioxide in the cells in the thermal insulating foamed material and reactionally fixing water generated by the side-reaction: a thermal insulating foamed material having an excellent thermal insulation ability, a thermal insulation cabinet using the thermal insulating foamed material, and a method for manufacturing the thermal insulating foamed material.

DISCLOSURE OF INVENTION

In order to attain the above-mentioned object, the thermal insulating foamed material in accordance with the present invention comprises:

a resin composition having closed cells filled with a volatile blowing agent,
at least one member of carbonates of alkali metal carbonates and alkaline-earth metal carbonates enclosed in the closed cells in said resin composition, and
a water adsorbent having a water-absorbing substance, comprising at least one member of moistened organic or inorganic compounds covered with a resinous coating film, enclosed in the closed cells in said resin composition.

In accordance with the present invention as composed in the above described manner, there is obtained a thermal insulating foamed material, in which carbon dioxide in the cells in the thermal insulating foamed material is adsorbed, from which water generated in the carbon dioxide-adsorbing reaction is removed, allowing no adverse effect on the thermal insulation ability, and which has an excellent thermal insulation ability.

Also, in the thermal insulating foamed material in accordance with the present invention, said carbonate is covered with a resinous coating film.

Further, in the thermal insulating foamed material in accordance with the present invention, said carbonate is enclosed in the inside space of the resinous coating film of the water adsorbent having a water-absorbing substance comprising at least one member of moistened organic or inorganic compounds covered with a resinous coating film.

Still, in the thermal insulating foamed material in accordance with the present invention, the water-absorbing substance comprising at least one member of moistened organic or inorganic compounds is an alkali metal hydroxide.

Still further, the thermal insulating foamed material in accordance with the present invention is designed such that at least one member of hydroxides of alkali metal hydroxides or alkaline-earth metal hydroxides remains in the closed cells.

The method for manufacturing the thermal insulating foamed material in accordance with the present invention comprises:

a step of mixing at least one member of hydroxides of alkali metal hydroxides or alkaline-earth metal hydroxides and a water adsorbent having a water-absorbing substance comprising at least one member of organic or inorganic compounds covered with a resinous coating film with a polyol, a surfactant, a catalyst, a reactive blowing agent, a volatile blowing agent and a polyisocyanate and foaming, thereby forming a resin composition containing carbon dioxide generated by a reaction of water with the polyisocyanate and the volatile blowing agent in the inside of the closed cells,
a step of forming a carbonate by adsorbing carbon dioxide in the closed cells in the resin composition onto said hydroxide, thereby substantially filling the inside space of said closed cells with the volatile blowing agent, and
a step of adsorbing water, which is generated during adsorption of carbon dioxide by said hydroxide in the closed cells in the resin composition, by the water adsorbent having a water-absorbing substance comprising at least one member of organic or inorganic compounds covered with a resinous coating film.

According to the method for manufacturing a thermal insulating foamed material in accordance with the present invention, there can be manufactured a thermal insulating foamed material, in which carbon dioxide in the cells in the thermal insulating foamed material is adsorbed, from which water that is generated in the carbon dioxide-adsorbing reaction is absorbed by the water-absorbing substance, thereby excluding the adverse effect on the thermal insulation ability, and which has an excellent thermal insulation ability.

Also, in the method for manufacturing a thermal insulating foamed material in accordance with the present invention, said hydroxide is covered with a resinous coating film in advance.

Also, in the method for manufacturing a thermal insulating foamed material in accordance with the present invention, said hydroxide is enclosed in the inside space of the resinous coating film of the water adsorbent having a water-absorbing substance comprising at least one member of organic or inorganic compounds covered with a resinous coating film.

Further, in the method for manufacturing a thermal insulating foamed material in accordance with the present invention, the water-absorbing substance comprising at least one member of moistened organic or inorganic compounds is an alkali metal hydroxide.

The thermal insulation cabinet in accordance with the present invention comprises:

a first wall member,
a second wall member,
a resin composition which is filled in a space formed between said first wall member and said second wall member and which has closed cells filled with a volatile blowing agent,
at least one member of carbonates of alkali metal carbonates or alkaline-earth metal carbonates enclosed in said resin composition, and
a water adsorbent, which has a water-absorbing substance comprising at least one member of moistened organic or inorganic compounds covered with a resinous coating film, enclosed in said resin composition.

According to the thermal insulation cabinet in accordance with the present invention, there can be manufactured a thermal insulation cabinet, in which carbon dioxide in the cells in the thermal insulating foamed material is adsorbed, from which water generated in the carbon dioxide-adsorbing reaction is absorbed by the water-absorbing substance, thereby excluding the adverse effect on the thermal insulation ability, and which is provided with a thermal insulating foamed material having an excellent thermal insulation ability.

Also, in the thermal insulation cabinet in accordance with the present invention, said carbonate is covered with a resinous coating film.

Further, in the thermal insulation cabinet in accordance with the present invention, said carbonate is enclosed in the inside space of the resinous coating film of the water adsorbent having a water-absorbing substance comprising at least one member of organic or inorganic compounds covered with a resinous coating film.

Still, in the thermal insulation cabinet in accordance with the present invention, the water-absorbing substance is an alkali metal hydroxide.

Still further, in the thermal insulation cabinet in accordance with the present invention, at least one member of hydroxides of alkali metal hydroxides or alkaline-earth metal hydroxides remains in the closed cells.

BRIEF DESCRIPTION OF THE DRAWINGS

FIG. 1 shows a perspective view, partly cut away, of a thermal insulation cabinet in a preferred embodiment in accordance with the present invention.
FIG. 2 shows a schematic view of a thermal insulating foamed material described in Example 1 of the present invention.
FIG. 3 shows a schematic view of a thermal insulating foamed material described in Example 2 of the present invention.
FIG. 4 shows a schematic view of a thermal insulating foamed material described in Example 3 of the present invention.
FIG. 5 shows a schematic view of a thermal insulating foamed material described in Example 7 of the present invention.

BEST MODE FOR CARRYING OUT THE INVENTION

In the followings will be described preferred embodiments of a thermal insulating foamed material, a method for manufacturing said thermal insulating foamed material and a thermal insulation cabinet using said thermal insulating foamed material, in accordance with the present invention, by means of attached drawings.

FIG. 1 shows a perspective view, partly cut away, of a thermal insulation cabinet 1 using a preferred embodiment in accordance with the present invention of a thermal insulating foamed material 4. In FIG. 1, a thermal insulation cabinet 1 is constructed with a first wall member 2 that is a vacuum-formed product made of ABS resin and a second wall member 3 that is a formed product made of a steel plate. A thermal insulating foamed material 4 made of a polyurethane resin is filled within inside space formed between the first wall member 2 and the second wall member 3.

Plurality of embodiments using the thermal insulating foamed material in accordance with the present invention are described below.

〈〈Example 1〉〉

FIG. 2 shows a schematic view of a thermal insulating foamed material described in Example 1 of the present invention. As shown in FIG. 2, a thermal insulating foamed material 41 is composed of closed cells 5 and cell walls 6 of polyurethane resin, and a volatile blowing agent (not shown) is filled in the inside of the closed cell 5. Also, in the thermal insulating foamed material 41, alkali metal carbonates 7 generated by reaction of alkali metal hydroxide as carbon dioxide adsorbent with carbon dioxide, and water adsorbents 10 having moistened water-absorbing substance 8 covered with resinous coating films 9 are dispersed, respectively.

As the carbon dioxide adsorbent, an alkaline-earth metal hydroxide may be used in place of the alkali metal hydroxide, and when the alkaline-earth metal hydroxide is used, the hydroxide reacts with carbon dioxide, thereby forming an alkaline-earth metal carbonate 7.

While FIG. 2 schematically shows the carbonate 7 and the water adsorbent 10, the carbonate 7 and the water adsorbent 10 are not exclusively present in the inside of the closed cell 5 but are present in the inside of the cell walls 6, and hence dispersed throughout the whole of the thermal insulating foamed material 41.

A method for manufacturing the thermal insulating foamed material 41 in Example 1 in accordance with the present invention is described below.

First, a premix composition is manufactured. The premix composition is produced by mixing in advance materials for the thermal insulating foamed material and stored in this state. The premix composition is manufactured by mixing a polyol, a catalyst, a surfactant and a blowing agent.

Then the thermal insulating foamed material 41 is manufactured by mixing and agitating the premix composition, a composition having an adsorbing function and an isocyanate composition so that the foaming is caused. The composition having an adsorbing function is produced by mixing the alkali metal hydroxide as the carbon dioxide adsorbent with the water adsorbent 10 having the water-absorbing substance 8 covered with the resinous coating film 9.

In Example 1, the function of adsorbing carbon dioxide by the carbon dioxide adsorbent and the function of adsorbing water by water adsorbent 10 are exerted through the cell walls 6 to the carbon dioxide and water in the closed cells 5 in the thermal insulating foamed material 41 produced by foaming. Accordingly, carbon dioxide and water in the closed cells in the thermal insulating foamed material 41 are adsorbed by the carbon dioxide adsorbent and the water adsorbent 10 dispersed in the thermal insulating foamed material 41.

Specific embodiments of the thermal insulating foamed material 41 of Example 1 and the thermal insulation cabinet 1 using the thermal insulating foamed material 41 are described below.

The premix composition in Example 1 was produced using the following materials.

As the polyol composition was used a mixture of an aromatic amines polyether polyol and an ethylene diamines polyether polyol. Its total hydroxyl value was 460 mg KOH/g. As the surfactant was used Surfactant F-335 manufactured by Shin-Etsu Chemical Industry Co., Ltd., Tokyo, Japan. As the catalyst was used KAOLIZER No.1 manufactured by Kao Corporation, Tokyo, Japan. In the blowing agent, pure water was used as the reactive blowing agent and cyclopentane was used as the volatile blowing agent. The premix composition was produced by mixing them in advance.

The composition having an adsorbing function was produced in the following manner.

Granules of lithium hydroxide reagent having an average particle size of 300 μm manufactured by Toyo Chemicals Co., Ltd., Tokyo, Japan, were used as the hydroxide that was converted into the carbonate after adsorption of carbon dioxide. Granules of silica gel A having an average particle size of 200 μm manufactured by Fuji Silysia Chemical Ltd., Osaka, Japan, were used as the water adsorbent 10 after coating with a resin mainly consisting of ethyl cellulose by means of a centrifugal rotatory fluid bed coater and granulator manufactured by Freund Industrial Co., Ltd., Tokyo, Japan, so that a coating film having an average film thickness of 2 μm was formed. The composition having an adsorbing function was produced by mixing the granules of the hydroxide and granules of the water adsorbent 10 described above.

Respective materials namely the premix composition, the composition having an adsorbing function and the isocyanate composition were mixed in the predetermined mixing ratio (see Table 1 below).

The isocyanate composition, which is agitated together with the premix composition and the composition having an adsorbing function described above, is an organic polyisocyanate comprising a polymeric MDI (diphenylmethane diisocyanate) having an amine equivalent of 135. Alternatively, the isocyanate composition may be a pre-polymer MDI or a TDI (tolylene diisocyanate).

The thermal insulation cabinet 1 was molded by mixing and agitating isocyanate composition with a mixture of the premix composition and the composition having an adsorbing function as described above in a mixing machine as a high-pressure foaming machine, and foaming while filling the obtained mixture into a space formed by the first wall member 2 and the second wall member 3, both being placed in a mold.

In Example 1, the cure time was 5 minutes that was a period from the time when the composition for foaming was filled into a space formed by the first wall member 2 and the second wall member 3, both being mounted in a mold, to the time when the mold was removed. The mold temperature during filling was 45 °C.

《Example 2》

FIG. 3 shows a schematic view of a thermal insulating foamed material 42 described in Example 2 of the present invention. As shown in FIG. 3, a thermal insulating foamed material 42 of Example 2 is composed of closed cells 5 and cell walls 6, and a volatile blowing agent (not shown) is filled in the inside of the closed cell 5. Also, in the thermal insulating foamed material 42, carbon dioxide adsorbents 11 formed by covering alkali metal hydroxide with resinous coating films 9 and water adsorbents 10 are dispersed, respectively. The hydroxide in the carbon dioxide adsorbent 11 reacts with carbon dioxide in the closed cells, thereby producing an alkali metal carbonate 7.

As the carbon dioxide adsorbent, an alkaline-earth metal hydroxide may be used in place of the alkali metal hydroxide, and when the alkaline-earth metal hydroxide is used, the hydroxide reacts with carbon dioxide, thereby forming an alkaline-earth metal carbonate 7.

While FIG. 3 schematically shows the carbon dioxide adsorbent 11 and the water adsorbent 10, the carbon dioxide adsorbent 11 and the water adsorbent 10 are not exclusively present in the inside of the closed cell 5 but are present in the inside of the cell wall 6, and hence dispersed throughout the whole of the thermal insulating foamed material 42.

A method for manufacturing the thermal insulating foamed material 42 in Example 2 in accordance with the present invention is described below.

First, a premix composition is manufactured. The premix composition is manufactured by mixing a polyol, a catalyst, a surfactant and a blowing agent.

Then the thermal insulating foamed material 42 is manufactured by mixing and agitating the premix composition, a composition having an adsorbing function and an isocyanate composition so that the foaming is caused. The composition having an adsorbing function is produced by mixing the carbon dioxide adsorbent, which is formed by covering the alkali metal hydroxide with the resinous coating film 9, and the water adsorbent 10, which is formed by covering the water-absorbing substance 8 with the resinous coating film 9.

In Example 2, the function of adsorbing carbon dioxide by the carbon dioxide adsorbent and the function of adsorbing water by water adsorbent 10 are exerted on carbon dioxide and water in the closed cells in the thermal insulating foamed material 42 produced by foaming through the cell wall 6. Accordingly, carbon dioxide and water in the thermal insulating foamed material 41 (sic) are adsorbed by the carbon dioxide adsorbent and the water adsorbent 10 dispersed in the thermal insulating foamed material 42.

Specific embodiments of the thermal insulating foamed material 42 of Example 2 and the thermal insulation cabinet 1 using the thermal insulating foamed material 42 are described below.

In Example 2, the composition having an adsorbing function was produced in the following manner.

Granules of lithium hydroxide reagent having an average particle size of 300 μm manufactured by Toyo Chemicals Co., Ltd., Tokyo, Japan, were used as the hydroxide that was converted into the carbonate after adsorption of carbon dioxide. The carbon dioxide adsorbent was produced by coating the granules of the lithium hydroxide reagent with a resin mainly consisting of an acryl resin by means of a centrifugal rotatory fluid bed coater and granulator manufactured by Freund Industrial Co., Ltd., Tokyo, Japan, so that a coating film having an average film thickness of 2 μm was formed. Granules of silica gel A having an average particle size of 200 μm manufactured by Fuji Silysia Chemical Ltd., Osaka, Japan, were used as the water adsorbent 10 after coating with a resin mainly consisting of ethyl cellulose by means of a centrifugal rotatory fluid bed coater and granulator manufactured by Freund Industrial Co., Ltd., Tokyo, Japan, so that a coating film having an average film thickness of 2 μm was formed. The composition having an adsorbing function was produced by mixing the granules of the carbon dioxide adsorbent and granules of the water adsorbent 10 described above.

In the production of the thermal insulating foamed material 42 of Example 2, a premix composition and an isocyanate composition similar to those in Example 1 were used. Respective materials namely the premix composition, the composition having an adsorbing function and the isocyanate composition in Example 2 were mixed in the predetermined mixing ratio (see Table 1 below).

The thermal insulation cabinet 1 was molded by mixing and agitating isocyanate composition with a mixture of the premix composition and the composition having an adsorbing function as described above in a mixing machine, and foaming while filling the obtained mixture into a space formed by the first wall member 2 and the second wall member 3, both being placed in a mold.

In Example 2, the cure time was 5 minutes that was a period from the time when the composition for foaming was filled into a space formed by the first wall member 2 and the second wall member 3, both being mounted in a mold, to the time when the mold was removed. The mold temperature during filling was 45 °C.

〈〈Example 3〉〉

FIG. 4 shows a schematic view of a thermal insulating foamed material 43 described in Example 3 of the present invention. As shown in FIG. 4, a thermal insulating foamed material 43 is composed of closed cells 5 and cell walls 6, and a volatile blowing agent (not shown) is filled in the inside of the closed cell 5. Also, in the thermal insulating foamed material 43, water adsorbents 100 formed by covering both of alkali metal carbonates 7 generated by reaction of alkali metal hydroxide with carbon dioxide and moistened water-absorbing substances 8 with resinous coating films 9 are dispersed.

As the carbon dioxide adsorbent, an alkaline-earth metal hydroxide may be used in place of the alkali metal hydroxide, and when the alkaline-earth metal hydroxide is used, the hydroxide reacts with carbon dioxide, thereby forming an alkaline-earth metal hydroxide 7.

While FIG. 4 schematically shows the water adsorbent 100, the water adsorbent 100 is not exclusively present in the inside of the closed cell 5 but are present in the inside of the cell wall 6, and hence dispersed throughout the whole of the thermal insulating foamed material 43.

A method for manufacturing the thermal insulating foamed material 43 in Example 3 in accordance with the present invention is described below.

First, a premix composition is manufactured. The premix composition is manufactured by mixing a polyol, a catalyst, a surfactant and a blowing agent.

Then the thermal insulating foamed material 43 is manufactured by mixing and agitating the premix composition, a composition having an adsorbing function and an isocyanate composition so that the foaming is caused. The composition having an adsorbing function is produced by covering both of the alkali metal hydroxide or the alkaline-earth metal hydroxide and the water-absorbing substance 8 with the resinous coating film 9.

In Example 3, the function of adsorbing carbon dioxide and the function of adsorbing water by water adsorbent 100 are exerted on carbon dioxide and water in the closed cells in the thermal insulating foamed material 43 produced by foaming through the cell wall 6. Accordingly, carbon dioxide and water in the closed cells in the thermal insulating foamed material 43 are adsorbed by the water adsorbent 100 dispersed in the thermal insulating foamed material 43.

Specific embodiments of the thermal insulating foamed material 43 of Example 3 and the thermal insulation cabinet 1 using the thermal insulating foamed material 43 are described below.

In Example 3, the composition having an adsorbing function was produced in the following manner.

Granules of lithium hydroxide reagent having an average particle size of 300 μm manufactured by Toyo Chemicals Co., Ltd., Tokyo, Japan, were used as the hydroxide that was converted into the carbonate after adsorption of carbon dioxide. Granules of silica gel A having an average particle size of 200 μm manufactured by Fuji Silysia Chemical Ltd., Osaka, Japan, were used as the water-absorbing substance 8. In Example 3, both granules of the hydroxide and the water-absorbing substance 8 were mixed and used as the composition having an adsorbing function after coating with a resin mainly consisting of an acryl resin by means of a centrifugal rotatory fluid bed coater and granulator manufactured by Freund Industrial Co., Ltd., Tokyo, Japan, so that a coating film having an average film thickness of 2 μm was formed.

In the production of the thermal insulating foamed material 43 of Example 3, a premix composition and an isocyanate composition similar to those in Example 1 were used. Respective materials namely the premix composition, the composition having an adsorbing function and the isocyanate composition in Example 3 were mixed in the predetermined mixing ratio (see Table 1 below).

The thermal insulation cabinet 1 was molded by mixing and agitating isocyanate composition with a mixture of the premix composition and the composition having an adsorbing function as described above in a mixing machine, and foaming while filling the obtained mixture into a space formed by the first wall member 2 and the second wall member 3, both being placed in a mold.

In Example 3, the cure time was 5 minutes that was a period from the time when the composition for foaming was filled into a space formed by the first wall member 2 and the second wall member 3, both being mounted in a mold, to the time when the mold was removed. The mold temperature during filling was 45 °C.

〈〈Example 4〉〉

Since the thermal insulating foamed material of Example 4 in accordance with the present invention is manufactured and constituted in a manner similar to that of the thermal insulating foamed material 41 of Example 1 shown in FIG. 2 mentioned above, the description is based on the schematic view of FIG. 2.

The thermal insulating foamed material of Example 4 is composed, as the thermal insulating foamed material 41 of Example 1 shown in FIG. 2, of closed cells 5 and cell walls 6, and a volatile blowing agent (not shown) is filled in the inside of the closed cell 5. Also, in the thermal insulating foamed material in Example 4, alkali metal carbonates 7 generated by a reaction of alkali metal hydroxide with carbon dioxide, and water adsorbents 10 are dispersed, respectively.

As the carbon dioxide adsorbent, an alkaline-earth metal hydroxide may be used in place of the alkali metal hydroxide, and when the alkaline-earth metal hydroxide is used, the hydroxide reacts with carbon dioxide, thereby forming an alkaline-earth metal carbonate 7.

A method for manufacturing the thermal insulating foamed material in Example 4 in accordance with the present invention is described below.

First, a premix composition is manufactured. The premix composition is manufactured by mixing a polyol, a catalyst, a surfactant and a blowing agent.

Then the thermal insulating foamed material is manufactured by mixing and agitating the premix composition, a composition having an adsorbing function and an isocyanate composition so that the foaming is caused. The composition having an adsorbing function is produced by mixing the alkali metal hydroxide as the carbon dioxide adsorbent with the water adsorbent 10 having the water-absorbing substance 8 covered with the resinous coating film 9.

Specific embodiments of the thermal insulating foamed material of Example 4 and the thermal insulation cabinet using the thermal insulating foamed material are described below.

In Example 4, the composition having an adsorbing function was produced in the following manner.

Granules of lithium hydroxide reagent having an average particle size of 300 µm manufactured by Toyo Chemicals Co., Ltd., Tokyo, Japan, were used as the hydroxide as the carbon dioxide adsorbent that was converted into the carbonate after adsorption of carbon dioxide. Granules of sodium hydroxide having an average particle size of 50 µm manufactured by Kanto Denka Kogyo Co., Ltd., Tokyo, Japan, were used as the water adsorbent 10 after coating with a resin mainly consisting of an acryl resin by means of a centrifugal rotatory fluid bed coater and granulator manufactured by Freund Industrial Co., Ltd., Tokyo, Japan, so that a coating film having an average film thickness of 2 µm was formed. The composition having an adsorbing function was produced by mixing the granules of the carbon dioxide adsorbent and granules of the water adsorbent 10 described above.

In the production of the thermal insulating foamed material of Example 4, a premix composition and an isocyanate composition similar to those in Example 1 were used. Respective materials namely the premix composition, the composition having an adsorbing function and the isocyanate composition in Example 4 were mixed in the predetermined mixing ratio (see Table 1 below).

The thermal insulation cabinet 1 was molded by mixing and agitating isocyanate composition with a mixture of the premix composition and the composition having an adsorbing function as described above in a mixing machine, and foaming while filling the obtained mixture into a space formed by the first wall member 2 and the second wall member 3, both being placed in a mold.

In Example 4, the cure time was 5 minutes that was a period from the time when the composition for foaming was filled into a space formed by the first wall member 2 and the second wall member 3, both being mounted in a mold, to the time when the mold was removed. The mold temperature during filling was 45 °C.

《Example 5》

Since the thermal insulating foamed material of Example 5 in accordance with the present invention is manufactured and constituted in a manner similar to that of the thermal insulating foamed material 42 of Example 2 shown in FIG. 3 mentioned above, the description is based on the schematic view of FIG. 3.

The thermal insulating foamed material of Example 5 is composed, as shown in FIG. 3, of closed cells 5 and cell walls 6, and a volatile blowing agent (not shown) is filled in the inside of the closed cell 5. Also, in the thermal insulating foamed material 42, carbon dioxide adsorbents 11 formed by covering alkali metal hydroxide with resinous coating film 9 and water adsorbents 10 formed by covering water-absorbing substance 8 with resinous coating 9 are dispersed, respectively. The hydroxide in the carbon dioxide adsorbent 11 reacts with carbon dioxide in the closed cells, thereby producing an alkali metal carbonate 7.

As the carbon dioxide adsorbent, an alkaline-earth metal hydroxide may be used in place of the alkali metal hydroxide, and when the alkaline-earth metal hydroxide is used, the hydroxide reacts with carbon dioxide, thereby forming an alkaline-earth metal carbonate 7.

A method for manufacturing the thermal insulating foamed material in Example 5 in accordance with the present invention is described below.

First, a premix composition is manufactured. The premix composition is manufactured by mixing a polyol, a catalyst, a surfactant and a blowing agent.

Then the thermal insulating foamed material is manufactured by mixing and agitating the premix composition, a composition having an adsorbing function and an isocyanate composition so that the foaming is caused. The composition having an adsorbing function is produced by mixing the carbon dioxide adsorbent, which is formed by covering the alkali metal hydroxide with the resinous coating film 9, and the water adsorbent 10, which is formed by covering the water-absorbing substance 8 with the resinous coating film 9.

Specific embodiments of the thermal insulating foamed material of Example 5 and the thermal insulation cabinet 1 using the thermal insulating foamed material are described below.

In Example 5, the composition having an adsorbing function was produced in the following manner.

Granules of lithium hydroxide reagent having an average particle size of 300 μm manufactured by Toyo Chemicals Co., Ltd., Tokyo, Japan, were used as the hydroxide that was converted into the carbonate 7 after adsorption of carbon dioxide. The granules of lithium hydroxide reagent were used as the carbon dioxide adsorbent after coating with a resin mainly consisting of an acryl resin by means of a centrifugal rotatory fluid bed coater and granulator manufactured by Freund Industrial Co., Ltd., Tokyo, Japan, so that a coating film having an average film thickness of 2 μm was formed. Granules of sodium hydroxide having an average particle size of 50 μm manufactured by Kanto Denka kogyo Co., Ltd., Tokyo, Japan, were used as the water adsorbent 10 after coating with a resin mainly consisting of an acryl resin by means of a centrifugal rotatory fluid bed coater and granulator manufactured by Freund Industrial Co., Ltd., Tokyo, Japan, so that a coating film having an average film thickness of 2 μm was formed. The composition having an adsorbing function was produced by mixing the granules of the carbon dioxide adsorbent and granules of the water adsorbent described above.

In the production of the thermal insulating foamed material of Example 5, a premix composition and an isocyanate composition similar to those in Example 1 were used. Respective materials namely the premix composition, the composition having an adsorbing function and the isocyanate composition in Example 5 were mixed in the predetermined mixing ratio (see Table 1 below).

The thermal insulation cabinet 1 was molded by mixing and agitating isocyanate composition with a mixture of the premix composition and the composition having an adsorbing function as described above in a mixing machine, and foaming while filling the obtained mixture into a space formed by the first wall member 2 and the second wall member 3, both being placed in a mold.

In Example 5, the cure time was 5 minutes that was a period from the time when the composition for foaming was filled into a space formed by the first wall member 2 and the second wall member 3, both being mounted in a mold, to the time when the mold was removed. The mold temperature during filling was 45 °C.

《Example 6》

Since the thermal insulating foamed material of Example 6 in accordance with the present invention is manufactured and constituted in a manner similar to that of the thermal insulating foamed material 43 of Example 3 shown in FIG. 4 mentioned above, the description is based on the schematic view of FIG. 4.

The thermal insulating foamed material of Example 6 is composed, as shown in FIG. 4, of closed cells 5 and cell walls 6, and a volatile blowing agent (not shown) is filled in the inside of the closed cell 5. Also, in the thermal insulating foamed material of Example 6, water adsorbents 100 formed by covering both of alkali metal carbonate 7 generated by reaction of alkali metal hydroxide with carbon dioxide and moistened water-absorbing substances 8 with resinous coating films 9 are dispersed.

As the substance having a carbon dioxide adsorbing function, an alkaline-earth metal hydroxide may be used, and when the alkaline-earth metal hydroxide is used, the hydroxide reacts with carbon dioxide, thereby forming an alkaline-earth metal carbonate 7.

A method for manufacturing the thermal insulating foamed material in Example 6 in accordance with the present invention is described below.

First, a premix composition is manufactured. The premix composition is manufactured by mixing a polyol, a catalyst, a surfactant and a blowing agent.

Then the thermal insulating foamed material is manufactured by mixing and agitating the premix composition, a composition having an adsorbing function and an isocyanate composition so that the foaming is caused. In Example 6, the composition having an adsorbing function is the water adsorbent 100 produced by covering both of the alkali metal hydroxide and the water-absorbing substance 8 with the resinous coating film 9.

In Example 6, the function of adsorbing carbon dioxide and the function of adsorbing water by water adsorbent 100 are exerted on carbon dioxide and water in the closed cells in the thermal insulating foamed material produced by foaming through the cell wall 6. Accordingly, carbon dioxide and water in the closed cells in the thermal insulating foamed material are adsorbed by the water adsorbent 100 dispersed in the thermal insulating foamed material.

Specific embodiments of the thermal insulating foamed material of Example 6 and the thermal insulation cabinet 1 using the thermal insulating foamed material are described below.

In Example 6, the composition having an adsorbing function was produced in the following manner.

Granules of lithium hydroxide reagent having an average particle size of 300 μm manufactured by Toyo Chemicals Co., Ltd., Tokyo, Japan, were used as the hydroxide that was converted into the carbonate after adsorption of carbon dioxide. Granules of sodium hydroxide having an average particle size of 50 µm manufactured by Kanto Denka Kogyo Co., Ltd., Tokyo, Japan, were used as the water-absorbing substance 8.

In Example 6, both granules of the hydroxide and the water-absorbing substance 8 were mixed and used as the composition having an adsorbing function after coating with a resin mainly consisting of an acryl resin by means of a centrifugal rotatory fluid bed coater and granulator manufactured by Freund Industrial Co., Ltd., Tokyo, Japan, so that a coating film having an average film thickness of 2 µm was formed.

In the production of the thermal insulating foamed material of Example 6, a premix composition and an isocyanate composition similar to those in Example 1 were used. Respective materials namely the premix composition, the composition having an adsorbing function and the isocyanate composition in Example 6 were mixed in the predetermined mixing ratio (see Table 1 below).

The thermal insulation cabinet 1 was molded by mixing and agitating isocyanate composition with a mixture of the premix composition and the composition having an adsorbing function as described above in a mixing machine, and foaming while filling the obtained mixture into a space formed by the first wall member 2 and the second wall member 3, both being placed in a mold.

In Example 6, the cure time was 5 minutes that was a period from the time when the composition for foaming was filled into a space formed by the first wall member 2 and the second wall member 3, both being mounted in a mold, to the time when the mold was removed. The mold temperature during filling was 45 °C.

《Example 7》

FIG. 5 shows a schematic view of a thermal insulating foamed material 44 described in Example 7 of the present invention. As shown in FIG. 5, a thermal insulating foamed material 44 of Example 7 is composed of closed cells 5 and cell walls 6, and a volatile blowing agent (not shown) is filled in the inside of the closed cell 5. In the inside of the thermal insulating foamed material 44 of Example 7, water adsorbents 110 are formed by covering alkali metal carbonate, which are used as water-absorbing substances 80, generated by reaction of alkali metal hydroxide with carbon dioxide with resinous coating film 9. The water adsorbents 110 are dispersed throughout the inside of thermal insulating foamed material 44 with substantial uniformity.

The thermal insulating foamed material 44 in Example 7 in accordance with the present invention is manufactured by mixing a polyol, a catalyst, a surfactant and a blowing agent and then by mixing, to the obtained mixture, a polyisocyanate and a composition having an adsorbing function with agitation so that the foaming is caused. In Example 7, the composition having an adsorbing function is the water adsorbent 110 having dual function of carbon dioxide adsorption and water adsorption.

While FIG. 5 shows the water adsorbent 110 placed in the inside of the closed cell 5, the water adsorbent 110 are not exclusively present in the inside of the closed cell 5 but are present in the inside of the cell wall 6, and hence dispersed with substantial uniformity throughout the inside of the thermal insulating foamed material 44.

In Example 7, the function of adsorbing water and the function of adsorbing carbon dioxide by the water adsorbent 110 are exerted on carbon dioxide and water in the closed cells in the thermal insulating foamed material 44 produced by foaming through the cell wall 6. Accordingly, carbon dioxide and water in the thermal insulating foamed material 44 are adsorbed by the water adsorbent 110 dispersed in the thermal insulating foamed material 44.

Specific embodiments of the thermal insulating foamed material 44 of Example 7 and the thermal insulation cabinet 1 using the thermal insulating foamed material 44 are described below.

In Example 7, the water adsorbent 110 which is the composition having an adsorbing function was produced in the following manner.

Granules of sodium hydroxide having an average particle size of 50 µm manufactured by Kanto Denka Kogyo Co., Ltd., Tokyo, Japan, were used as the water-absorbing substance 80 acting also as the hydroxide that was converted into the carbonate after adsorption of carbon dioxide. The granules of sodium hydroxide were used as the water adsorbent 110 after coating with a resin mainly consisting of an acryl resin by means of a centrifugal rotatory fluid bed coater and granulator manufactured by Freund Industrial Co., Ltd., Tokyo, Japan, so that a coating film having an average film thickness of 2 µm was formed.

In the production of the thermal insulating foamed material of Example 7, a premix composition and an isocyanate composition similar to those in Example 1 were used. Respective materials namely the premix composition, the composition having an adsorbing function and the isocyanate composition in Example 7 were mixed in the predetermined mixing ratio (see Table 1 below).

The thermal insulation cabinet 1 was molded by mixing and agitating isocyanate composition with a mixture of the premix composition and the composition having an adsorbing function as described above in a mixing machine, and foaming while filling the obtained mixture into a space formed by the first wall member 2 and the second wall member 3, both being placed in a mold (see FIG. 1).

In Example 7, the cure time was 5 minutes that was a period from the time when the composition for foaming was filled into a space formed by the first wall member 2 and the second wall member 3, both being mounted in a mold, to the time when the mold was removed. The mold temperature during filling was 45 °C.

Each of the thermal insulation cabinets manufactured in Example 1 to Example 7 was broken up and samples of the thermal insulating foamed materials were cut off from the thermal insulation cabinets. The foam density ($kg/m^3$) at an early stage of foaming (1 day after the foaming) of the samples from the thermal insulating foamed materials was measured. Also, the gas composition (%) in the cell and the thermal conductivity (W/mK) of the thermal insulating foamed materials at 1 day and 7 days after the foaming were measured. Further, the degree of bulging of the foam (mm) was measured using samples, having dimensions of 30 × 40 × 5 cm, of the thermal insulating foamed materials manufactured in Example 1 to Example 7 were measured. The degree of bulging was expressed in the dilation from the prescribed thickness (5 cm) of the samples at the molding.

The thermal conductivity was measured with AUTO-Λ manufactured by EKO Instrument Trading Co., Ltd., Tokyo, Japan using a foam having dimensions of 20 × 20 × 2.5 cm cut out from the respective thermal insulation cabinets. The gas composition in the cell was measured with a Gas Chromatograph manufactured by Shimazu Corporation, Kyoto, Japan.

The composition in parts and the results of evaluation for Example 1 to Example 7 are shown in Table 1. Comparative Example 1 included in Table 1 indicates the result of measurement when the carbon dioxide adsorbent was lithium hydroxide alone.

Table 1

| | | | Example 1 | Example 2 | Example 3 | Example 4 | Example 5 | Example 6 | Example 7 | Comparative Example 1 |
|---|---|---|---|---|---|---|---|---|---|---|
| Amounts of raw materials in parts by weight | Premix composition | Polyol | 100 | 100 | 100 | 100 | 100 | 100 | 100 | 100 |
| | | Catalyst | 3 | 3 | 3 | 3 | 3 | 3 | 3 | 3 |
| | | Surfactant | 2 | 2 | 2 | 2 | 2 | 2 | 2 | 2 |
| | | Cyclopentane | 15 | 15 | 15 | 15 | 15 | 15 | 15 | 15 |
| | | Pure water | 2 | 2 | 2 | 2 | 2 | 2 | 2 | 2 |
| | Composition having an adsorbing function | Example 1: Lithium hydroxide | 20 | - | - | - | - | - | - | - |
| | | Example 1: Coated silica gel | 8 | - | - | - | - | - | - | - |
| | | Example 2: Coated LiOH | - | 20 | - | - | - | - | - | - |
| | | Example 2: Coated silica gel | - | 8 | - | - | - | - | - | - |
| | | Example 3: Coated (LiOH+silica gel) | - | - | 28 | - | - | - | - | - |
| | | Example 4: Lithium hydroxide | - | - | - | 10 | - | - | - | - |
| | | Example 4: Coated NaOH | - | - | - | 5 | - | - | - | - |
| | | Example 5: Coated LiOH | - | - | - | - | 10 | - | - | - |
| | | Example 5: Coated NaOH | - | - | - | - | 5 | - | - | - |
| | | Example 6: Coated (LiOH+NaOH) | - | - | - | - | - | 15 | - | - |
| | | Example 7: Coated NaOH | - | - | - | - | - | - | 12 | - |
| | | Comparative Example 1: Lithium hydroxide | - | - | - | - | - | - | - | 20 |
| | Polyisocyanate | | 125 | 125 | 125 | 125 | 125 | 125 | 125 | 125 |
| Properties of foam | Density of foam ($Kg/m^3$) | | 41 | 42 | 42 | 41 | 41 | 41 | 41 | 40 |
| | Thermal conductivity (W/mK) | After 1 day | 0.0200 | 0.0201 | 0.0190 | 0.0197 | 0.0196 | 0.0187 | 0.0186 | 0.0206 |
| | | After 7 days | 0.0188 | 0.0187 | 0.0187 | 0.0184 | 0.0184 | 0.0184 | 0.0182 | 0.0201 |
| | Composition of gas in cells(%): Carbon dioxide | After 1 day | 0 | 0 | 0 | 0 | 0 | 0 | 0 | 0 |
| | | After 7 days | 0 | 0 | 0 | 0 | 0 | 0 | 0 | 0 |
| | Composition of gas in cells(%): Water | After 1 day | 1 | 1 | 0 | 1 | 1 | 0 | 0 | 2 |
| | | After 7 days | 0 | 0 | 0 | 0 | 0 | 0 | 0 | 2 |
| | Bulging of the foam (mm) | | 5 | 2 | 1 | 2 | 1 | 1 | 1 | 5 |

As shown in Table 1, the thermal insulating foamed material of Example 1 in accordance with the present invention uses lithium hydroxide as a hydroxide that reacts with carbon dioxide and silica gel as a water-absorbing substance that adsorbs water generated as a by-product upon reaction with carbon dioxide. Therefore, the gaseous composition in the inside of the closed cells in the thermal insulating foamed material is cyclopentane alone as the volatile blowing agent and substantially no water nor carbon dioxide are present. Accordingly, it was confirmed that, in Example 1, the thermal insulating foamed material and the thermal insulation cabinet having an excellent thermal insulation property could be obtained.

Since silica gel used in the thermal insulating foamed material of Example 1 was covered with a resinous coating film, it did not adsorb pure water as the reactive blowing agent during formation of the thermal insulating foamed material and no adverse effect on the urethane reaction was observed.

Lithium hydroxide used in the thermal insulating foamed material of Example 1 does not prevent the generation of carbon dioxide by the reaction of reactive blowing agent and the polyisocyanate. Further, since the reaction of lithium hydroxide and carbon dioxide proceeds slowly as compared with the reaction generating carbon dioxide, the generated carbon dioxide can contribute to cell formation in the thermal insulating foamed material.

Lithium hydroxide forms a carbonate by reacting with carbon dioxide remained in cells after the thermal insulating foamed material was formed. It is considered that this fact allowed the gas composition remained in cells to become substantially cyclopentane alone as the volatile blowing agent and the gaseous thermal conductivity in the inside of the cells of the thermal insulating foamed material could be improved.

Further, silica gel adsorbs water generated as a by-product upon reaction of lithium hydroxide with carbon dioxide. It is considered that this fact allowed further increase in the ratio of volatile blowing agent (the ratio of the amount of the volatile blowing agent contained in the thermal insulating foamed material having the prescribed dimensions divided by the total gas amount contained in said thermal insulating foamed material) in the gas composition remained in the cells and of the gaseous thermal conductivity in the inside of the cells of the thermal insulating foamed material could be improved.

The thermal insulating foamed material of Example 2 in accordance with the present invention uses lithium hydroxide covered with a resinous coating film in advance as a hydroxide that reacts with carbon dioxide and silica gel covered with a resinous coating film as a water-absorbing substance that adsorbs water generated as a by-product upon reaction of carbon dioxide and hydroxide. Therefore, the gaseous composition in the inside of the closed cells in the thermal insulating foamed material is filled with cyclopentane as the volatile blowing agent. Accordingly, it was confirmed that, in Example 2, the thermal insulating foamed material and the thermal insulation cabinet having an excellent thermal insulation property could be obtained.

Also, in Example 2, the degree of bulging in the thermal insulating foamed material was suppressed. It is considered that the suppression is due to retardation of the reaction of lithium hydroxide and carbon dioxide by covering lithium hydroxide with a resinous coating film and decrease in generation of water in the curing step of the foam by the moderate reaction of carbon dioxide absorption after curing.

The thermal insulating foamed material of Example 3 in accordance with the present invention has the constitution that lithium hydroxide is enclosed in the inside of the resinous coating film for a water-absorbing substance formed by covering silica gel with the resinous coating film, and therefore, the gaseous composition in the inside of the closed cells in the thermal insulating foamed material is filled with cyclopentane as the volatile blowing agent. Accordingly, it was confirmed that, in Example 3, the thermal insulating foamed material and the thermal insulation cabinet having an excellent thermal insulation property could be obtained.

Also, according to the thermal insulating foamed material of Example 3, it was confirmed that the decreasing effect on the thermal conductivity occurred at the earlier stage of the formation of the foam, that is 1 day after the formation of the foam. It is considered that the presence of both of the lithium hydroxide and silica gel in the inside of the resinous coating film allows existence of silica gel in the vicinity of the reaction field where carbon dioxide is adsorbed, and allows rapid adsorption of water that is generated by the side-reaction and is causative of lowering thermal insulation ability.

The thermal insulating foamed material of Example 4 in accordance with the present invention uses lithium hydroxide as a hydroxide that reacts with carbon dioxide and sodium hydroxide covered with the resinous coating film as a water-absorbing substance that adsorbs water generated as a by-product upon reaction of carbon dioxide and the hydroxide. Therefore, the gaseous composition in the inside of the closed cells in the thermal insulating foamed material is filled with cyclopentane as the volatile blowing agent. Accordingly, it was confirmed that, in Example 4, the thermal insulating foamed material and the thermal insulation cabinet having an excellent thermal insulation property could be obtained.

Also, in Example 4, the decreasing effect on thermal conductivity was enhanced. It is considered that this is due to allowable decrease in the amount of lithium hydroxide to be added because of possibility of carbon dioxide adsorption by sodium hydroxide, which is used as the water adsorbent, and to allowable decrease in the amount of the solid composition to be added because of capacity of sodium hydroxide, which has a high water-absorbing ability, to completely absorb water even at a small amount.

The thermal insulating foamed material of Example 5 in accordance with the present invention uses lithium hydroxide covered with the resinous coating film in advance as a hydroxide that reacts with carbon dioxide and sodium hydroxide covered with the resinous coating film as a water-absorbing substance that adsorbs water generated as a by-product upon reaction of carbon dioxide and the hydroxide. Therefore, the gaseous composition in the inside of the closed cells in the thermal insulating foamed material is filled with cyclopentane as the volatile blowing agent. Accordingly, it was confirmed that, in Example 5, the thermal insulating foamed material and the thermal insulation cabinet having an excellent thermal insulation property could be obtained.

The thermal insulating foamed material of Example 6 in accordance with the present invention has the constitution that lithium hydroxide is enclosed in the inside of the resinous coating film for a water-absorbing substance formed by covering sodium hydroxide with the resinous coating film, and therefore, the gaseous composition in the inside of the closed cells in the thermal insulating foamed material is filled with cyclopentane as the volatile blowing agent. Accordingly, it was confirmed that, in Example 5 (sic), the thermal insulating foamed material and the thermal insulation cabinet having an excellent thermal insulation property could be obtained.

Also, in Example 6, it was confirmed that the decreasing effect on the thermal conductivity occurred at the earlier stage of the foam formation. It is considered that the presence of both of the lithium hydroxide and sodium hydroxide in the inside of the resinous coating film allows existence of sodium hydroxide in the vicinity of the reaction field where carbon dioxide is adsorbed, and allows rapid adsorption of water that is generated by the side-reaction and is causative of lowering thermal insulation ability.

In the thermal insulating foamed material of Example 7 in accordance with to the present invention, by the action of sodium hydroxide as the carbon dioxide adsorbent and water adsorbent, the gaseous composition in the inside of the closed cells in the thermal insulating foamed material is filled with cyclopentane as the volatile blowing agent. Accordingly, it was confirmed that, in Example 7, the thermal insulating foamed material and the thermal insulation cabinet having an excellent thermal insulation property could be obtained.

Also, in the thermal insulating foamed material of Example 7, it was confirmed that the decreasing effect on the thermal conductivity occurred at the earlier stage and that the effect was strong. It is considered that the dual action of sodium hydroxide as the carbon dioxide adsorbent and water adsorbent enabled rapid adsorption of water after the adsorbing reaction on carbon dioxide. As the result, according to Example 7, decrease in the amount of sodium hydroxide to be added becomes possible and deterioration of thermal conductivity by the addition of solid composition is avoided.

In contrast, in Comparative Example 1, improvement in thermal conductivity was low despite that carbon dioxide was removed. It is considered that this is due to the presence of water, which has a high thermal conductivity, in the inside of the cell.

As described above, in the present invention is used cyclopentane, which is a hydrocarbon having properties that the ozone depletion coefficient which is zero and the effect on global waning is negligible, as a blowing agent for urethane foam. These properties are essential for the protection of global environment. The use of cyclopentane allows presentation of a thermal insulation foamed material having a high thermal insulating property and a high quality as well as a thermal insulation cabinet having such thermal insulating foamed material filled therein and a high quality.

The alkali metal hydroxide as the carbon dioxide adsorbent used in the present invention includes, for example, lithium hydroxide, sodium hydroxide, potassium hydroxide and the like. The alkaline-earth metal hydroxide includes, for example, calcium hydroxide, barium hydroxide and the like.

It is preferred that the alkali metal hydroxide or alkaline-earth metal hydroxide having a deliquescing property used as the carbon dioxide adsorbent, such as sodium hydroxide, is covered with a resinous coating film in advance.

The water-absorbing substance used in the present invention includes silica gel, zeolite, activated carbon, activated alumina, calcium chloride and the like, and any compound capable of adsorbing water affords a similar effect.

As the alkali metal hydroxide for water-absorbing substance in the present invention, it is possible to use sodium hydroxide, potassium hydroxide, lime soda and the like, and by using them, adsorption of water can be attained simultaneously adsorbing carbon dioxide thereby producing carbonate.

As the material for resinous coating film in the present invention, a film permeable to carbon dioxide and water such as a coating film mainly consisting of ethyl cellulose or an acryl resin, a coating film mainly consisting of vinyl acetate, a coating film mainly consisting of a urethane, a coating film mainly consisting of a silicone and the like can provide the effect.

The reactive blowing agent in the present invention is preferably a compound generating carbon dioxide upon reaction with an isocynate such as water, lower carboxylic acids and the like.

The volatile blowing agent in the present invention is one used as the main blowing agent for the resin composition and is preferably a compound having a good compatibility with the polyol composition and a low gaseous thermal conductivity. As specific examples, hydrocarbon compounds such as cyclopentane, n-pentane, isopentane, neopentane, butane, isobutane and the like are suitable from the viewpoint of the protection of global environment. Among them, more preferred is cyclopentane that has a low gaseous thermal conductivity. Also applicable are HFC-356mmf, HFC-245fa and the like, which are the hydrofluorocarbon blowing agent.

Further, in the present invention, a mixture of two or more of the above-mentioned volatile blowing agent can be used without problem.

According to the present invention as described by means of Example 1 through Example 7, carbon dioxide in the cells in thermal insulating foamed material is adsorbed and water that is generated by the adsorbing reaction of carbon dioxide does not adversely affect the thermal insulation ability. Accordingly, the present invention can provide a thermal insulating foamed material having an excellent thermal insulation ability and a method for manufacturing the same as well as a thermal insulation cabinet.

The thermal insulating foamed material as claimed in Claim 1 of the present invention comprises a foamed polyurethane resin composition having closed cells filled with a volatile blowing agent, and characterized in that it has at least one member of carbonates of alkali metal carbonates and alkaline-earth metal carbonate, and a water adsorbent having a water-absorbing substance comprising moistened organic or inorganic compounds covered with a resinous coating film, enclosed in the thermal insulating foamed material. Therefore, in accordance with the present invention, carbon dioxide in the cells in thermal insulating foamed material is adsorbed, and water that is generated by the adsorbing reaction of carbon dioxide is also adsorbed, failing to adversely affect the thermal insulation ability. Therefore, thermal insulating foamed material having an excellent thermal insulation ability can be obtained.

By the above-mentioned constitution, since the water-absorbing substance, added as a material, comprising an organic or inorganic compounds is covered with a resinous coating film, it does not adsorb the reactive blowing agent during the formation of the thermal insulation foamed material and does not affect the urethane reaction. Also, the alkali metal hydroxide or the alkaline-earth metal hydroxide is less active to the reactive blowing agent and does not prevent generation of carbon dioxide from the reaction of the reactive blowing agent with the polyisocyanate. Further, since the reaction of the alkali metal hydroxide or the alkaline-earth metal hydroxide with carbon dioxide proceeds moderately as compared with the reaction generating carbon dioxide, the generated carbon dioxide can contribute to cell formation in the thermal insulating foamed material.

The alkali metal hydroxide or the alkaline-earth metal hydroxide reacts with carbon dioxide remained in the cells after the formation of the thermal insulating foamed material, thereby producing the carbonate. This allows to substantially fill the gaseous composition remained in the cells with the volatile blowing agent.

Furthermore, the water adsorbent adsorbs water generated as a by-product by the reaction of the alkali metal hydroxide or the alkaline-earth metal hydroxide with carbon dioxide. This allows increase in the ratio of the volatile blowing agent in the gaseous composition remained in the cells and allows improvement of gaseous thermal conductivity in the closed cells in the thermal insulating foamed material.

The thermal insulating foamed material as claimed in Claim 2 of the present invention is characterized in that the carbonate is covered with a resinous coating film. Therefore, in accordance with the present invention, carbon dioxide in the cells in thermal insulating foamed material is adsorbed, and water that is generated by the adsorbing reaction of carbon dioxide is also adsorbed, failing to adversely affect the thermal insulation ability. Therefore, a thermal insulating foamed material having an excellent thermal insulation ability can be obtained.

By the above-mentioned constitution, since the water-absorbing substance, added as a material, comprising an organic or inorganic compounds is covered with a resinous coating film, it does not adsorb the reactive blowing agent during the formation of the thermal insulation foamed material and does not affect the urethane reaction. Also, the alkali metal hydroxide or the alkaline-earth metal hydroxide is less active to the reactive blowing agent and does not prevent generation of carbon dioxide from the reaction of the reactive blowing agent with the polyisocyanate. Further, since the reaction of the alkali metal hydroxide or the alkaline-earth metal hydroxide with carbon dioxide proceeds moderately as compared with the reaction generating carbon dioxide, the generated carbon dioxide can contribute to cell formation in the thermal insulating foamed material.

Further, since the alkali metal carbonate or the alkaline-earth metal carbonate is covered with the resinous coating film, and the carbon dioxide adsorbing reaction after the curing of the foam proceeds moderately, bulging of the foam due to the generation of water during curing of the foam is suppressed.

The thermal insulating foamed material as claimed in Claim 3 of the present invention is characterized in that the carbonate is enclosed in the inside space of the resinous coating film of the water adsorbent having a water-absorbing substance having moistened organic or inorganic compounds covered with a resinous coating film. Therefore, in accordance with the present invention, carbon dioxide in the cells in thermal insulating foamed material is adsorbed, and water that is generated by the adsorbing reaction of carbon dioxide fails to adversely affect the thermal insulation ability. Therefore, a thermal insulating foamed material having an excellent thermal insulation ability can be obtained.

By the above-mentioned constitution, since the water-absorbing substance, added as a material, comprising an organic or inorganic compounds is covered with a resinous coating film, it does not adsorb the reactive blowing agent during the formation of the thermal insulation foamed material and does not affect the urethane reaction. Also, the alkali metal hydroxide or the alkaline-earth metal hydroxide is less active to the reactive blowing agent and does not prevent generation of carbon dioxide from the reaction of the reactive blowing agent with the polyisocyanate. Further, since the reaction of the alkali metal hydroxide or the alkaline-earth metal hydroxide with carbon dioxide proceeds moderately as compared with the reaction generating carbon dioxide, the generated carbon dioxide can contribute to cell formation in the thermal insulating foamed material.

Further, since the water-absorbing substance exists in the in the vicinity of the reaction field where carbon dioxide is adsorbed, and enables rapid adsorption of water that is generated by the side-reaction and is causative of lowering thermal insulation ability, the decreasing effect on the thermal conductivity occurs at the earlier stage.

The thermal insulating foamed material as claimed in Claim 4 of the present invention is characterized in that the water-absorbing substance is an alkali metal hydroxide. Therefore, in accordance with the present invention, carbon dioxide in the cells in thermal insulating foamed material is adsorbed, and water that is generated by the adsorbing reaction of carbon dioxide is also adsorbed, failing to adversely affect the thermal insulation ability. Therefore, a thermal insulating foamed material having an excellent thermal insulation ability can be obtained.

By the above-mentioned constitution, since the alkali metal hydroxide rapidly adsorbs carbon dioxide and water that is generated as the by-product by the reaction with hydroxide and is causative of lowering thermal insulation ability, further addition of other solid composition as the water-absorbing substance into the resin is not required. Therefore, decrease in the amount of the solid substance to be added becomes possible and further decreasing effect on the thermal conductivity can be obtained.

The method for manufacturing the thermal insulating foamed material as claimed in Claim 6 of the present invention comprises:

a step of mixing at least one member of hydroxides of alkali metal hydroxides or alkaline-earth metal hydroxides and a water adsorbent having a water-absorbing substance comprising at least one member of organic or inorganic compounds covered with a resinous coating film to a polyol, a surfactant, a catalyst, a reactive blowing agent, a volatile blowing agent and a polyisocyanate and foaming, thereby forming a foamed polyurethane resin composition containing carbon dioxide generated by a reaction of water with the polyisocyanate and the volatile blowing agent in the inside of the closed cells,
a step of forming a carbonate by adsorbing carbon dioxide in the closed cells in the foamed polyurethane resin composition onto said hydroxide, thereby substantially filling the inside space of said closed cells with the volatile blowing agent, and
a step of adsorbing water, which is generated during adsorption of carbon dioxide in the closed cells in the foamed polyurethane resin composition by said hydroxide, onto the water adsorbent having a water-absorbing substance comprising at least one member of organic or inorganic compounds covered with a resinous coating film.

Therefore, according to the present invention, carbon dioxide in the closed cells in thermal insulating foamed material is adsorbed, and water that is generated by the adsorbing reaction of carbon dioxide is also adsorbed, failing to adversely affect the thermal insulation ability. Therefore, a thermal insulating foamed material having an excellent thermal insulation ability can be obtained.

The method for manufacturing the thermal insulating foamed material as claimed in Claim 7 of the present invention is characterized in that the hydroxide is covered with a resinous coating film in advance. Therefore, in accordance with the present invention, carbon dioxide in the cells in thermal insulating foamed material is adsorbed, and water that is generated by the adsorbing reaction of carbon dioxide is also adsorbed, failing to adversely affect the thermal insulation ability. Therefore, a thermal insulating foamed material having an excellent thermal insulation ability can be obtained.

By the above-mentioned constitution, since the alkali metal hydroxide or the alkaline-earth metal hydroxide is covered with the resinous coating film, and the carbon dioxide adsorbing reaction after the curing of the thermal insulating foamed material proceeds moderately, bulging of the thermal insulating foamed material due to the generation of water during curing of the resin is suppressed.

The method for manufacturing the thermal insulating foamed material as claimed in Claim 8 of the present invention is characterized in that the hydroxide is enclosed in the inside space of the resinous coating film of the water adsorbent having a water-absorbing substance having moistened organic or inorganic compounds covered with a resinous coating film. Therefore, in accordance with the present invention, carbon dioxide in the closed cells in thermal insulating foamed material is adsorbed, and water that is generated by the adsorbing reaction of carbon dioxide is also adsorbed, failing to adversely affect the thermal insulation ability. Therefore, a thermal insulating foamed material having an excellent thermal insulation ability can be obtained.

By the above-mentioned constitution, since the water-absorbing substance exists in the vicinity of the reaction field where carbon dioxide is adsorbed, and enables rapid adsorption of water that is generated by the side-reaction and is causative of lowering thermal insulation ability, the decreasing effect on the thermal conductivity occurs at the earlier stage.

The method for manufacturing the thermal insulating foamed material as claimed in Claim 9 of the present invention is characterized in that the water-absorbing substance is an alkaline-earth metal hydroxide. Therefore, in accordance with the present invention, carbon dioxide in the cells in thermal insulating foamed material is adsorbed, and water that is generated by the adsorbing reaction of carbon dioxide is also adsorbed, failing to adversely affect the thermal insulation ability. Therefore, a thermal insulating foamed material having an excellent thermal insulation ability can be obtained.

By the above-mentioned constitution, since the alkali metal hydroxide rapidly adsorbs carbon dioxide and water that is generated as the by-product by the reaction with hydroxide and is causative of lowering thermal insulation ability, further addition of other solid composition as the water-absorbing substance into the resin is not required. Therefore, decrease in the amount of the solid substance to be added becomes possible and further decreasing effect on the thermal conductivity can be obtained.

The thermal insulation cabinet as claimed in Claim 10 of the present invention comprises a first wall member, a second wall member, and characterized in that a foamed polyurethane resin composition having closed cells filled with a volatile blowing agent is filled in a space formed between said first wall member and said second wall member, and a carbonate of alkali metal carbonate or alkaline-earth metal carbonate and a water adsorbent having a water-absorbing substance comprising at least one member of moistened organic or inorganic compounds covered with a resinous coating film is present in the inside of the foamed polyurethane resin composition. Therefore, in accordance with the present invention, carbon dioxide in the cells in thermal insulating foamed material is adsorbed, and water that is generated by the adsorbing reaction of carbon dioxide is also adsorbed, failing to adversely affect the thermal insulation ability. Therefore, a thermal insulating foamed material having an excellent thermal insulation ability can be obtained.

The thermal insulation cabinet as claimed in Claim 11 of the present invention is characterized in that the carbonate is covered with a resinous coating film. Therefore, in accordance with the present invention, carbon dioxide in the cells in thermal insulating foamed material is adsorbed, and water that is generated by the adsorbing reaction of carbon dioxide fails to adversely affect the thermal insulation ability. Therefore, a thermal insulating foamed material having an excellent thermal insulation ability can be obtained.

The thermal insulation cabinet as claimed in Claim 12 of the present invention is characterized in that the carbonate is enclosed in the inside space of the resinous coating film of the water adsorbent having a water-absorbing substance comprising at least one member of moistened organic or inorganic compounds covered with a resinous coating film. Therefore, in accordance with the present invention, carbon dioxide in the cells in thermal insulating foamed material is adsorbed, and water that is generated by the adsorbing reaction of carbon dioxide is also adsorbed, failing to adversely affect the thermal insulation ability. Therefore, a thermal insulating foamed material having an excellent thermal insulation ability can be obtained.

The thermal insulation cabinet as claimed in Claim 13 of the present invention is characterized in that the water-absorbing substance is an alkali metal hydroxide. Therefore, in accordance with the present invention, carbon dioxide in the closed cells in thermal insulating foamed material is adsorbed, and water that is generated by the adsorbing reaction of carbon dioxide is also adsorbed, failing to adversely affect the thermal insulation ability. Therefore, a thermal insulating foamed material having an excellent thermal insulation ability can be obtained.

The thermal insulation cabinet as claimed in Claim 14 of the present invention is characterized in that the hydroxide of at least one member of an alkali metal hydroxide or an alkaline-earth metal hydroxide remains. Therefore, in accordance with the present invention, carbon dioxide in the cells in thermal insulating foamed material is adsorbed, and water that is generated by the adsorbing reaction of carbon dioxide is also adsorbed, failing to adversely affect the thermal insulation ability. Therefore, a thermal insulating foamed material having an excellent thermal insulation ability can be obtained.

POSSIBILITY FOR INDUSTRIAL APPLICABILITY

The present invention provides a thermal insulating foamed material having an excellent thermal insulation ability, by quickly adsorbing carbon dioxide in the cells in the thermal insulating foamed material and reactionally fixing water generated by the side-reaction, a thermal insulation cabinet using the thermal insulating foamed material, a method for manufacturing the thermal insulating foamed material, and a powder mixing machine used for the manufacturing method, resulting in the manufacture of refrigerators and freezers which do not bring an environmental disruption, such as ozone depletion, global warming and so on.

## Claims

**1.** A thermal insulating foamed material comprising:

a resin composition having closed cells filled with a volatile blowing agent,
at least one member of carbonates of alkali metal carbonates and alkaline-earth metal carbonates enclosed in said resin composition, and
a water adsorbent having a water-absorbing substance, comprising at least one member of moistened organic or inorganic compounds covered with a resinous coating film, enclosed in said resin composition.

2. A thermal insulating foamed material in accordance with Claim 1, wherein said carbonate is covered with a resinous coating film.

3. A thermal insulating foamed material in accordance with Claim 1, wherein said carbonate is enclosed in the resinous coating film of the water-absorbing substance comprising at least one member of moistened organic or inorganic compounds covered with a resinous coating film.

4. A thermal insulating foamed material in accordance with Claim 1, wherein said water-absorbing substance is an alkali metal hydroxide.

5. A thermal insulating foamed material in accordance with anyone of Claim 1 to Claim 4, wherein at least one member of hydroxides of alkali metal hydroxides and alkaline-earth metal hydroxides remains.

6. A method for manufacturing the thermal insulating foamed material comprising:

a step of mixing at least one member of hydroxides of alkali metal hydroxides or alkaline-earth metal hydroxides and a water adsorbent having a water-absorbing substance comprising at least one member of organic or inorganic compounds covered with a resinous coating film with a polyol, a surfactant, a catalyst, a reactive blowing agent, a volatile blowing agent and a polyisocyanate and foaming, thereby forming a resin composition containing carbon dioxide generated by a reaction of water with the polyisocyanate and the volatile blowing agent in the inside of the closed cells,
a step of forming a carbonate by adsorbing carbon dioxide in the closed cells in the resin composition onto said hydroxide, thereby substantially filling the inside space of said closed cells with the volatile blowing agent, and
a step of adsorbing water, which is generated during adsorption of carbon dioxide by said hydroxide in the closed cells in the resin composition, by the water adsorbent having a water-absorbing substance comprising at least one member of organic or inorganic compounds covered with a resinous coating film.

7. A method for manufacturing the thermal insulating foamed material in accordance with Claim 6, wherein said hydroxide is covered with a resinous coating film in advance.

8. A method for manufacturing the thermal insulating foamed material in accordance with Claim 6, wherein said hydroxide is enclosed in the resinous coating film of the water-absorbing substance comprising at least one member of moistened organic or inorganic compounds covered with a resinous coating film.

9. A method for manufacturing the thermal insulating foamed material in accordance with anyone of Claim 6 to Claim 8, wherein said water-absorbing substance is an alkali metal hydroxide.

10. A thermal insulation cabinet comprising:

a first wall member,
a second wall member,
a resin composition which is filled in a space formed between said first wall member and said second wall member and which has closed cells filled with a volatile blowing agent,
at least one member of carbonates of alkali metal carbonates or alkaline-earth metal carbonates enclosed in said closed cells in the resin composition, and
a water adsorbent, which has a water-absorbing substance comprising at least one member of moistened organic or inorganic compounds covered with a resinous coating film, enclosed in said closed cells in the resin composition.

11. A thermal insulation cabinet in accordance with Claim 10, wherein said carbonate is covered with a resinous coating film.

12. A thermal insulation cabinet in accordance with Claim 10, wherein said carbonate is enclosed in the resinous coating film of the water-absorbing substance comprising at least one member of organic or inorganic compounds covered with a resinous coating film.

13. A thermal insulation cabinet in accordance with Claim 10, wherein said water-absorbing substance is an alkali metal hydroxide.

**14.** A thermal insulation cabinet in accordance with anyone of Claim 10 to Claim 13, wherein at least one member of hydroxides of alkali metal hydroxides and alkaline-earth metal hydroxides remains in the closed cells.

FIG. 1

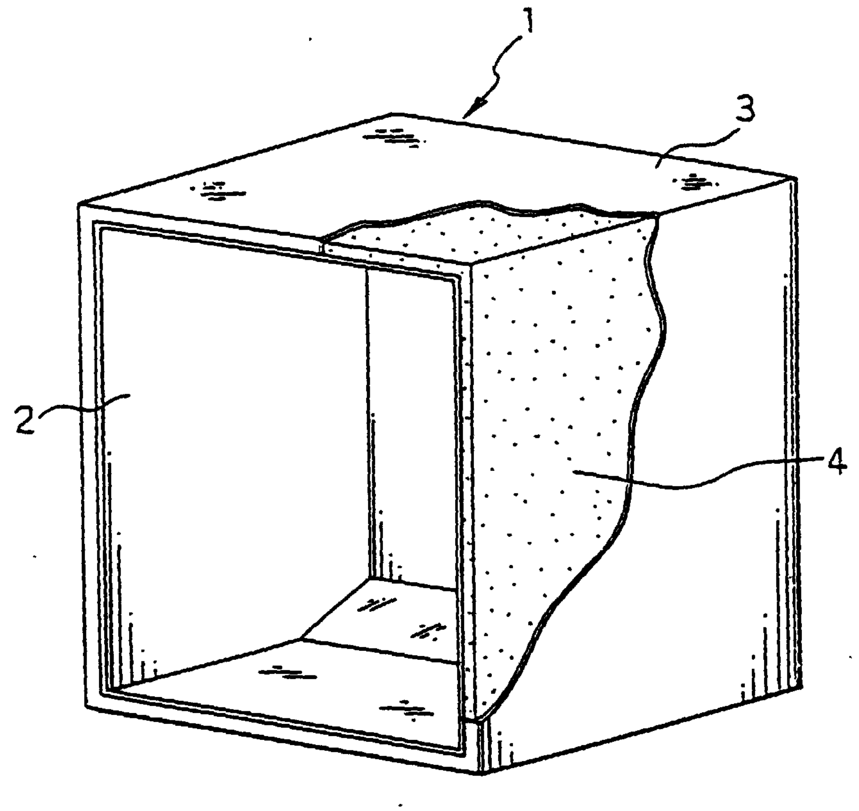

FIG. 2

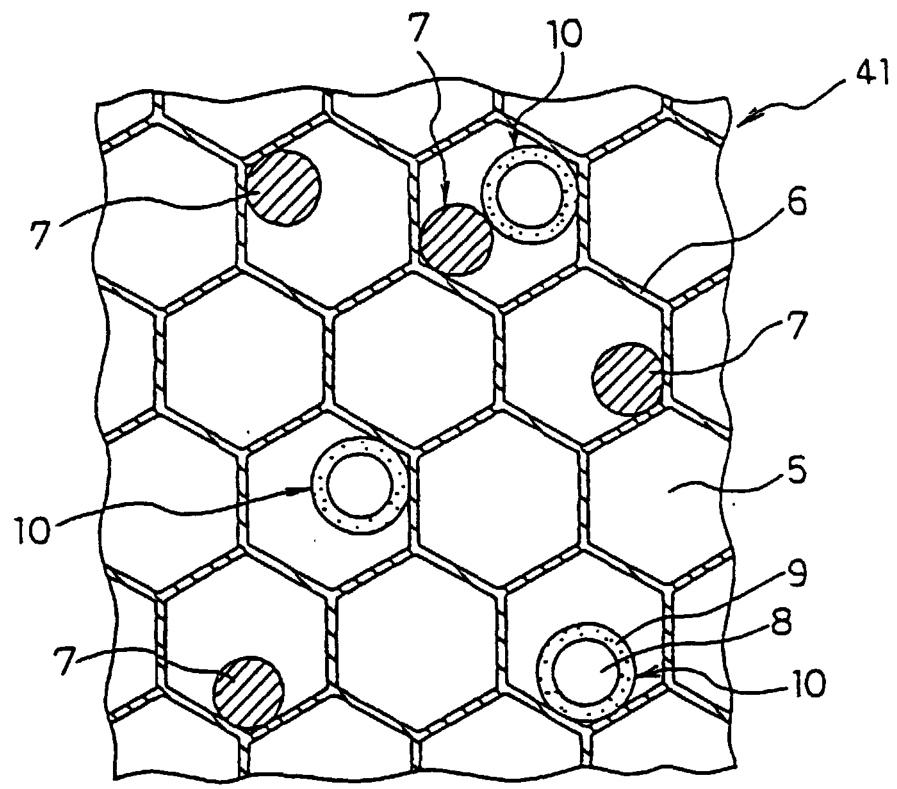

FIG. 3

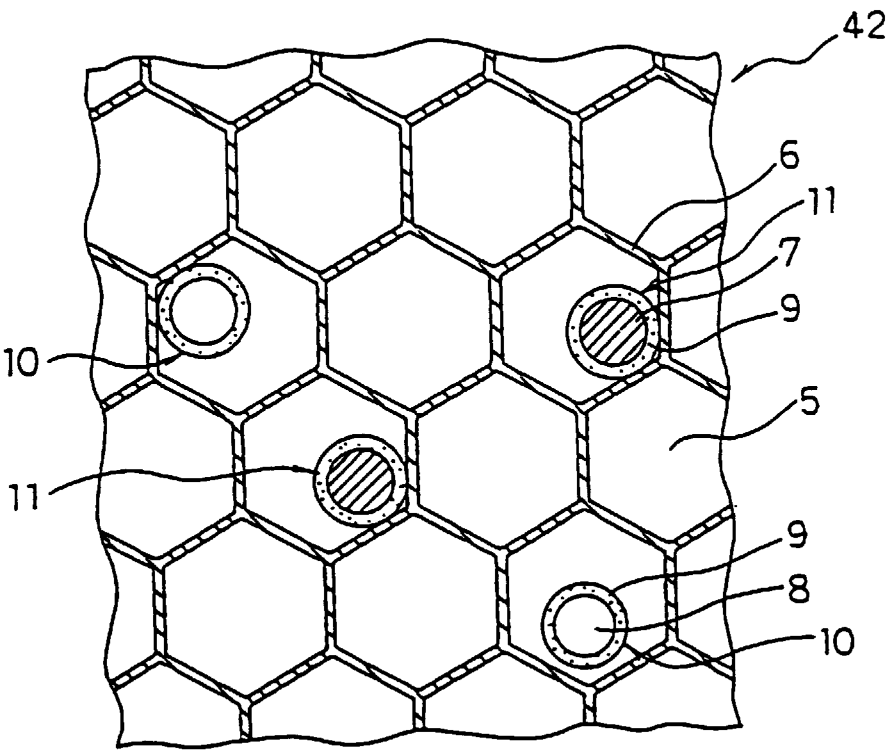

FIG. 4

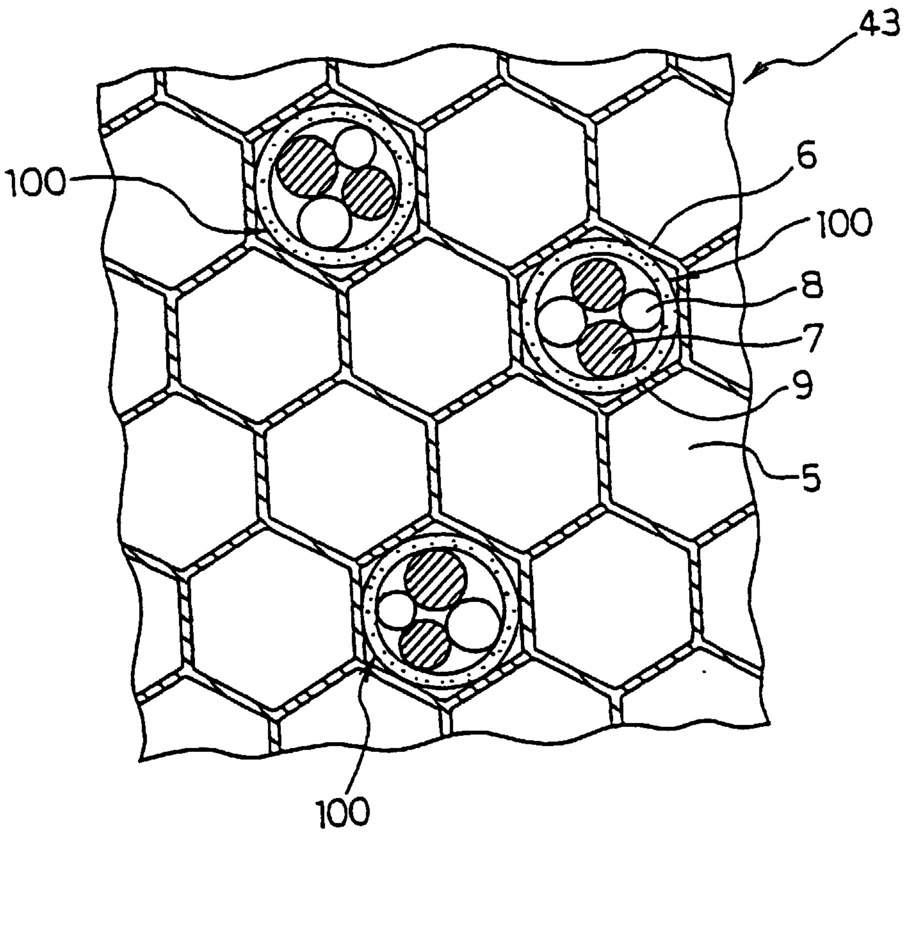

FIG. 5

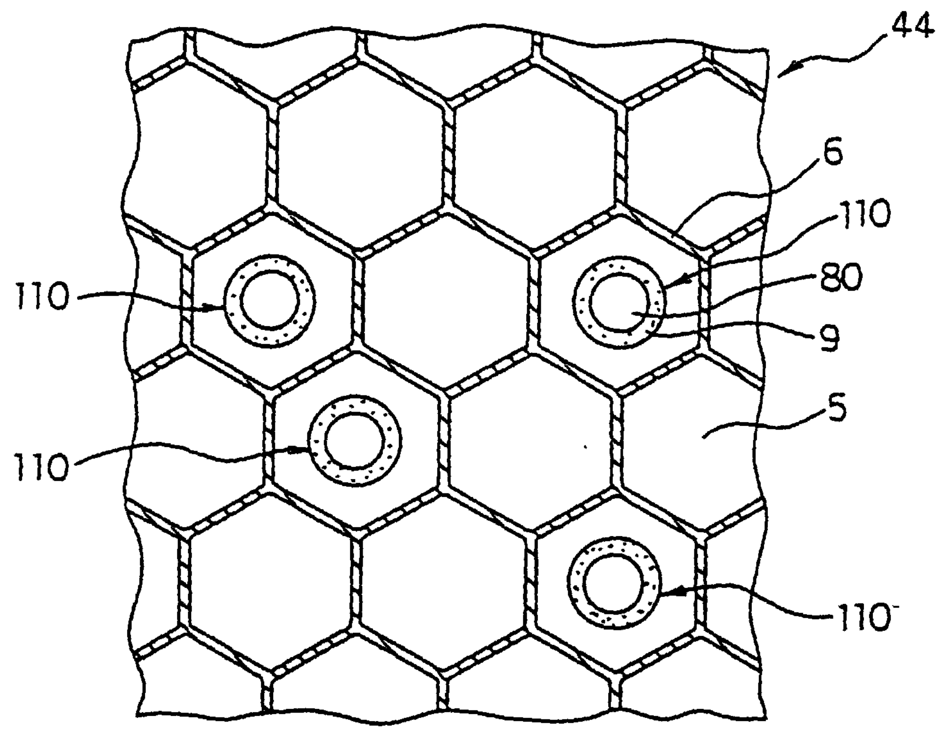

**INTERNATIONAL SEARCH REPORT**

International application No.
PCT/JP97/04054

A. CLASSIFICATION OF SUBJECT MATTER
Int. Cl$^6$ C08J9/12

According to International Patent Classification (IPC) or to both national classification and IPC

B. FIELDS SEARCHED

Minimum documentation searched (classification system followed by classification symbols)
Int. Cl$^6$ C08J9/12

Documentation searched other than minimum documentation to the extent that such documents are included in the fields searched
Jitsuyo Shinan Koho 1926 - 1997
Kokai Jitsuyo Shinan Koho 1971 - 1997
Toroku Jitsuyo Shinan Koho 1994 - 1997

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP, 9-118731, A (General Electric Co.), May 6, 1997 (06. 05. 97), Claims; column 2, line 41 to column 3, line 35; column 5, lines 24 to 32 & US, 9118731, A | 1, 4-6, 9-10, 13-14<br>2, 7, 11<br>3, 8, 12 |
| Y<br>A | JP, 8-73637, A (Matsushita Refrigeration Co.), March 19, 1996 (19. 03. 96), Claims (Family: none) | 2, 7, 11<br>1, 3-6, 8-10, 12-14 |
| EX | JP, 9-302123, A (Matsushita Refrigeration Co.), November 25, 1997 (25. 11. 97), Claims (Family: none) | 1 - 14 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| December 3, 1997 (03. 12. 97) | December 16, 1997 (16. 12. 97) |
| Name and mailing address of the ISA/<br>Japanese Patent Office<br>Facsimile No. | Authorized officer<br><br>Telephone No. |

Form PCT/ISA/210 (second sheet) (July 1992)

**INTERNATIONAL SEARCH REPORT**

International application No.
PCT/JP97/04054

C (Continuation). DOCUMENTS CONSIDERED TO BE RELEVANT

| Category* | Citation of document, with indication, where appropriate, of the relevant passages | Relevant to claim No. |
|---|---|---|
| A | JP, 8-81574, A (General Electric Co.), March 26, 1996 (26. 03. 96), Claims; column 4, line 42 to column 5, line 11 & EP, 687704, A3 & US, 5530035, A | 1 - 14 |
| A | JP, 6-322166, A (General Electric Co.), November 22, 1994 (22. 11. 94), Claims & EP, 618253, A1 & US, 5371113, A & US, 5397809, A & CN, 1093376, A | 1 - 14 |
| A | JP, 9-132658, A (Matsushita Refrigeration Co.), May 20, 1997 (20. 05. 97), Claims & EP, 723988, A1 | 1 - 14 |

Form PCT/ISA/210 (continuation of second sheet) (July 1992)